# EUROPEAN PATENT APPLICATION

(11) **EP 3 968 678 A1**
(43) Date of publication of application: **16.03.2022**
(21) Application number: 19928953.9
(22) Date of filing: 10.05.2019
(51) Int. Cl.: H04W 8/22, H04W 16/32, H04W 72/04

(54) **USER DEVICE AND BASE STATION DEVICE**

(71) Applicant: NTT DOCOMO, INC., Chiyoda-Ku Tokyo 100-6150 (JP)
(72) Inventor: TAKAHASHI, Hideaki, Tokyo 100-6150 (JP); HARADA, Hiroki, Tokyo 100-6150 (JP)
(74) Representative: Hoffmann Eitle
(86) International application number: PCT/JP2019/018784
(87) International publication number: WO 2020/230201

(57) **Abstract**

A user equipment includes a reception unit configured to receive information requesting a report of a UE (User Equipment) capability from a base station apparatus, a control unit configured to include the UE capability supported for a band combination in the report, and a transmission unit configured to transmit the report to the base station apparatus, and the control unit includes information indicating that a parameter supported in carrier aggregation for the band combination is applied to dual connectivity in the report.

## Description

### TECHNICAL FIELD

The present invention relates to a user equipment and a base station apparatus in a radio communication system.

### BACKGROUND ART

In NR (New Radio) (also referred to as "5G") as a successor system of LTE (Long Term Evolution), techniques for satisfying a high capacity system, a fast data transmission speed, a low latency, simultaneous connection of a large number of terminals, a low cost, power saving or the like as requirements are being studied (for example, non-patent document 1).

In the NR system, similar to dual connectivity in the LTE system, a technique called an LTE-NR dual connectivity, an NR-NR dual connectivity or a Multi RAT (Radio Access Technology) dual connectivity (referred to as an "MR-DC" hereinafter) where data is divided between a base station (eNB) of the LTE system and a base station (gNB) of the NR system and is simultaneously transmitted and received by these base stations is introduced (for example, non-patent document 2).

### [Prior Art Document]

### [Non-Patent Document]

[Non-Patent Document 1] 3GPP TS 38.300 V15.5.0 (2019-03)
[Non-Patent Document 2] 3GPP TS 37.340 V15.5.0 (2019-03)

### SUMMARY OF INVENTION

### [PROBLEM TO BE SOLVED BY THE INVENTION]

If a user equipment has different capabilities for respective NR band combinations of the NR-DC (NR-NR Dual Connectivity) and CA (Carrier Aggregation), parameters applied to the NR band combinations supporting the NR-DC and parameters applied to the NR band combinations supporting the CA must be signaled individually. However, if the parameters for the NR-DC and the parameters for the CA are individually signaled for all the NR band combinations, the signaling size would be enormous.

In light of the above aspect, the present invention aims to improve efficiency of reporting the capabilities of user equipments in the dual connectivity conducted in a radio communication system.

### [MEANS FOR SOLVING THE PROBLEM]

According to a technique disclosed herein, there is provided a user equipment, comprising:
a reception unit that receives information requesting a report of a UE (User Equipment) capability from a base station apparatus;
a control unit that includes the UE capability supported for a band combination in the report; and
a transmission unit that transmits the report to the base station apparatus,
wherein the control unit includes information indicating that a parameter supported in carrier aggregation for the band combination is applied to dual connectivity in the report.

### [ADVANTAGE OF THE INVENTION]

According to the disclosed technique, the efficiency of reporting the capabilities of user equipments in the dual connectivity conducted in a radio communication system can be improved.

### BRIEF DESCRIPTION OF DRAWINGS

FIG. 1 is a diagram for illustrating an exemplary arrangement of a network architecture according to an embodiment of the present invention;
FIG. 2 is a diagram for illustrating an exemplary arrangement of a radio communication system according to an embodiment of the present invention;
FIG. 3 is a sequence diagram for illustrating an exemplary operation according to an embodiment of the present invention;
FIG. 4 is a flowchart for illustrating an exemplary operation according to an embodiment of the present invention;
FIG. 5 is a diagram for illustrating an exemplary specification change (1) according to an embodiment of the present invention;
FIG. 6 is a diagram for illustrating an exemplary specification change (2) according to an embodiment of the present invention;
FIG. 7 is a diagram for illustrating one exemplary functional arrangement of a base station apparatus 10 according to an embodiment of the present invention;
FIG. 8 is a diagram for illustrating one exemplary functional arrangement of a user equipment 20 according to an embodiment of the present invention; and
FIG. 9 is a diagram for illustrating one exemplary hardware arrangement of the base station apparatus 10 or the user equipment 20 according to an embodiment of the present invention.

### EMBODIMENTS OF THE INVENTION

Hereinafter, embodiments of the present invention will be described with reference to the drawings. The embodiments described below are merely one example, and embodiments to which the present invention is applied are not limited to the following embodiments.

In operations of a radio communication system of an embodiment of the present invention, existing techniques are used as needed. Note that the existing techniques are existing LTE, for example, but are not limited to the existing LTE. Also, unless specifically stated otherwise, it should be appreciated that the terminology "LTE" used herein has a broader meaning including LTE-Advanced and its subsequent schemes (e.g., NR) .

Also, in embodiments of the present invention as described below, terminologies "SS (Synchronization Signal)", "PSS (Primary SS)", "SSS (Secondary SS)", "PBCH (Physical Broadcast Channel) " are used. "PRACH (Physical Random Access Channel)" or the like used in the existing LTE are used. This is due to convenience of recitations, and a signal, a function or the like similar to them may be referred to as other wordings. Also, the above terminologies correspond to "NR-SS", "NR-PSS", "NR-SSS", "NR-PBCH" and "NR-PRACH", respectively, in the NR. Note that even if the signals are used in the NR, they may not be explicitly described as "NR-".

Also, in embodiments of the present invention, a duplex scheme may be TDD (Time Division Duplex) scheme, FDD (Frequency Division Duplex) scheme or other schemes (e.g., flexible duplex scheme or the like).

Also, in embodiments of the present invention, "configuring" a radio parameter or the like may mean that a predetermined value is pre-configured or that a radio parameter indicated from the base station apparatus 10 or the user equipment 20 is configured.

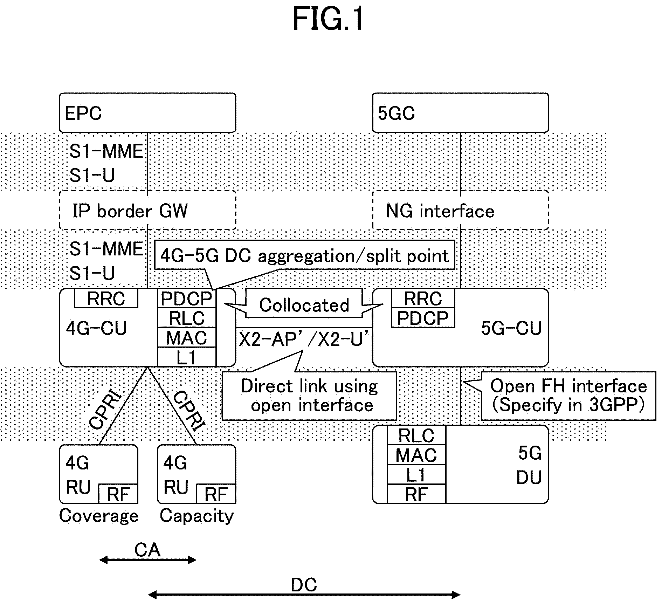

FIG. 1 is a diagram for illustrating an exemplary arrangement of a network architecture according to an embodiment of the present invention. As illustrated in FIG. 1, a radio network architecture according to an embodiment of the present invention includes a 4G-CU, a 4G-RU (Remote Unit: remote radio station), an EPC (Evolved Packet Core) and so on on the LTE-Advanced side. The radio network architecture according to an embodiment of the present invention includes a 5G-CU, a 5G-DU and so on on the 5G side.

As illustrated in FIG. 1, the 4G-CU includes an RRC (Radio Resource Control), a PDCP (Packet Data Convergence Protocol), an RLC (Radio Link Control), a MAC (Medium Access Control) and an L1 (Layer 1: a PHY layer or a physical layer) and is coupled to the 4G-RU via a CPRI (Common Public Radio Interface). Network nodes including the 4G-CU and the 4G-RU are referred to as eNBs.

On the other hand, as illustrated in FIG. 1, at the 5G side, the 5G-CU includes an RRC layer and is coupled to the 5G-DU via a FH (Flonthaul) interface and a 5GC (5G Core Network) via an NG interface. Also, the 5G-CU is coupled to the 4G-CU via an X2 interface. The PDCP layer in the 4G-CU serves as a coupling or decoupling point in dual connectivity for 4G-5G, that is, an EN-DC (E-UTRA-NR Dual Connectivity). Network nodes including the 5G-CU and the 5G-DU are referred to as gNBs. Also, the 5G-CU may be referred to as a gNB-CU, and a 5G-DU may be referred to as a gNB-DU.

Also, as illustrated in FIG. 1, CA (Carrier Aggregation) is performed between the 4G-RUs, and the DC is performed between the 4G-RU and the 5G-DU. Note that although not illustrated, a UE (User Equipment) is wirelessly connected via an RF of the 4G-RU or the 5G-DU to transmit and receive packets.

FIG. 1 illustrates a radio network architecture for the DC of the LTE-NR, that is, the EN-DC (E-UTRA-NR Dual Connectivity). However, also in the case where the 4G-CU is separated into CU-DU or operates in NR standalone, a similar radio network architecture may be used. If the 4G-CU is separated into CU-DU, functionalities associated with the RRC layer and the PDCP layer may be moved to the 4G-CU, and the RLC layer and layers below may be included in the 4G-DU. Note that the data rate of the CPRI may be decreased through the CU-DU separation.

Note that a plurality of 5G-DUs may be coupled to the 5G-CU. Also, the NR-DC (NR-NR Dual Connectivity) may be performed by coupling the UE to a plurality of 5G-CUs, and the NR-DC may be performed by coupling the UE to a plurality of 5G-DUs and a single 5G-CU. The 5G-CU may be coupled to an EPC directly, not via the 4G-CU; and the 4G-CU may be coupled to the 5GC directly, not via the 5G-CU.

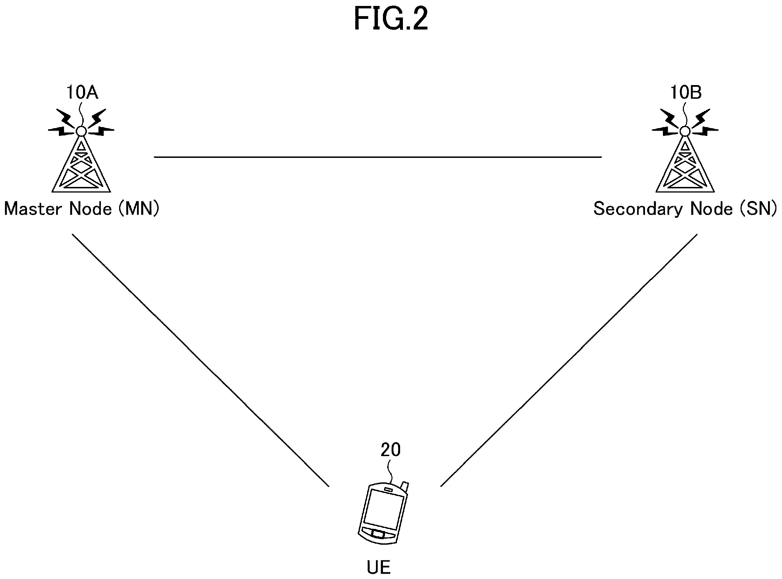

FIG. 2 is a diagram for illustrating an exemplary arrangement of a radio communication system according to an embodiment of the present invention. FIG. 2 is a schematic diagram for illustrating a radio communication system in MR-DC (Multi-RAT Dual Connectivity).

As illustrated in FIG. 2, a user equipment 20 communicates to base station apparatuses 10A and 10B served by the NR system (which if they are not distinguished, may be referred to as the base station apparatuses 10 hereinafter). Furthermore, the user equipment 20 supports NR-NR dual connectivity, that is, NR-DC, where the base station apparatus 10A serves as a master node (which may be referred to as an "MN" hereinafter) and the base station apparatus 10B serves as a secondary node (which may be referred to as an "SN" hereinafter). The user equipment 20 can use a plurality of component carriers served by the base station apparatus 10A as the master node and the base station apparatus 10B as the secondary node simultaneously to perform simultaneous transmissions or receptions to/from the base station apparatus 10A as the master node and the base station apparatus 10B as the secondary node.

Also, as illustrated in FIG. 2, the user equipment 20 may communicate to the base station apparatus 10A served by the LTE system and the base station apparatus 10B served by the NR system. Furthermore, the user equipment 20 may support LTE-NR dual connectivity, that is, EN-DC, where the base station apparatus 10A serves as the MN and the base station apparatus 10B serves as the SN. The user equipment 20 can use a plurality of component carriers served by the base station apparatus 10A as the master node and the base station apparatus 10B as the secondary node simultaneously to perform simultaneous transmissions or receptions to/from the base station apparatus 10A as the master node and the base station apparatus 10B as the secondary node.

Also, as illustrated in FIG. 2, the user equipment 20 may communicate to the base station apparatus 10A served by the NR system and the base station apparatus 10B served by the LTE system. Furthermore, the user equipment 20 may support NR-LTE dual connectivity, that is, NR-DC (NR-E-UTRA Dual Connectivity), where the base station apparatus 10A serves as the MN and the base station apparatus 10B serves as the SN. The user equipment 20 can use a plurality of component carriers served by the base station apparatus 10A as the master node and the base station apparatus 10B as the secondary node simultaneously to perform simultaneous transmissions or receptions to/from the base station apparatus 10A as the master node and the base station apparatus 10B as the secondary node.

Also, as illustrated in FIG. 2, the user equipment 20 may communicate to the base station apparatuses 10A and 10B served by the NR system. Furthermore, the user equipment 20 may support NR-NR dual connectivity, that is, the NR-DC, where the base station apparatus 10A serves as the MN and the base station apparatus 10B serves as the SN. The user equipment 20 can use a plurality of component carriers served by the base station apparatus 10A as the master node and the base station apparatus 10B as the secondary node simultaneously to perform simultaneous transmissions or receptions to/from the base station apparatus 10A as the master node and the base station apparatus 10B as the secondary node.

Although embodiments below are mainly described in conjunction with the NR-NR dual connectivity, that is, the NR-DC, the user equipment 20 according to an embodiment of the present invention is not limited to the above dual connectivity and can be applied to dual connectivity between multiple radio communication systems using different RATs, that is, the MR-DC.

Here, parameters and elements associated with capabilities of the user equipment 20 are defined not commonly to all CCs (Component Carriers) but per band combination, per band of a band combination or per CC of a band combination. Accordingly, the parameters and elements associated with the capabilities of the user equipment 20 for the CA and the parameters and elements associated with the capabilities of the user equipment 20 for the DC are separately configured.

For example, if the user equipment 20 supports the CA and the DC for a band combination "band 1 + band 2", a capability of the user equipment 20 associated with "band 1 + band 2" for the CA and a capability of the user equipment 20 associated with "band 1 + band 2" must be signaled, which may increase the signaling size.

Accordingly, a new parameter for indicating whether to support the NR-DC is provided in an existing CA band combination (BandCombinationList) so as to allow a ca-ParametersNR and a featureSetCombination for the NR-DC to be signaled. Furthermore, if the ca-ParametersNR and the featureSetCombination for the NR-DC are not signaled, the ca-ParametersNR and the featureSetCombination for the CA are made available for the NR-DC. Both the ca-ParametersNR and the featureSetCombination are UE capabilities defined per band combination.

The ca-ParametersNR may include parameters that indicate whether multiple TAs (Timing Advances) are supported, whether simultaneous transmissions of a PRACH, an SRS (Sounding Reference Signal), a PUCCH (Physical Uplink Control Channel) and a PUSCH (Physical Uplink Shared Channel) are supported, whether simultaneous transmissions and receptions in inter-band CA or SUL are supported, or the like, for example. In other words, the ca-ParametersNR includes configuration parameters associated with the CA defined per band combination.

The featureSetCombination is a two-dimensional matrix of featureSet entries, and the featureSet includes configuration parameters for downlink and uplink. For example, the featureSet may include information indicative of a scaling factor, whether cross carrier scheduling is supported, a subcarrier interval, a bandwidth or the like. In other words, the featureSetCombination includes configuration parameters for downlink and uplink defined per band combination.

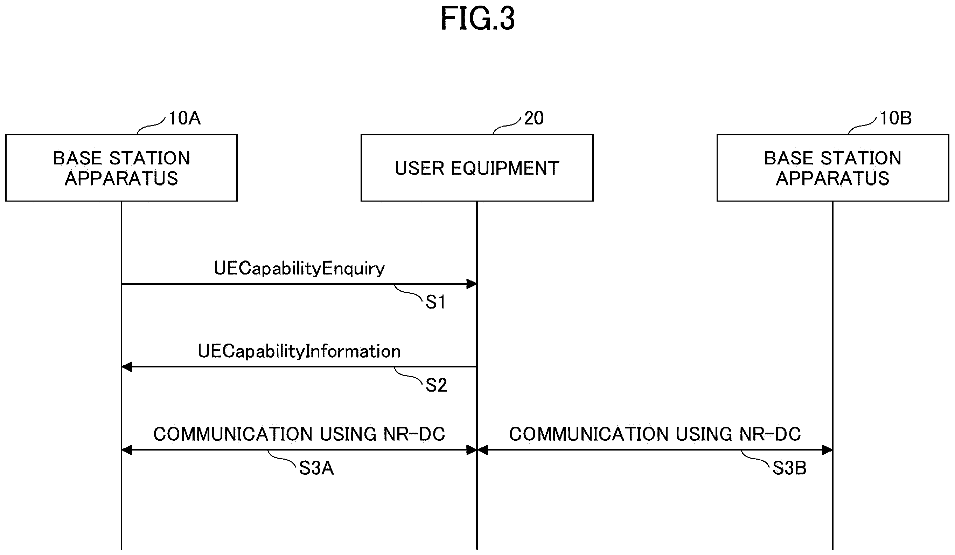

FIG. 3 is a sequence diagram for illustrating an exemplary operation according to an embodiment of the present invention. At step S1, the base station apparatus 10A as the master node transmits an RRC message "UECapabilityEnquiry" to the user equipment 20. The "UECapabilityEnquiry" is used for the base station apparatus 10A to obtain the UE capability of the user equipment 20. Then, the user equipment 20 transmits a "UECapabilityInformation" to the base station apparatus 10A (S2). The "UECapabilityInformation" is used to transmit the UE capability of the user equipment 20 to the base station apparatus 10A. The "UECapabilityInformation" includes the above-stated CA band combination as the UE capability and may include a "BandCombinationList", a "BandCombinationList-v15xy" and so on, for example.

At step S3A, the base station apparatus 10A uses a band combination for the NR-DC indicated by the "UECapabilityInformation" as being supported by the user equipment 20 to communicate to the user equipment 20. Analogously, the base station apparatus 10B uses a band combination for the NR-DC indicated by the "UECapabilityInformation" as being supported by the user equipment 20 to communicate to the user equipment 20.

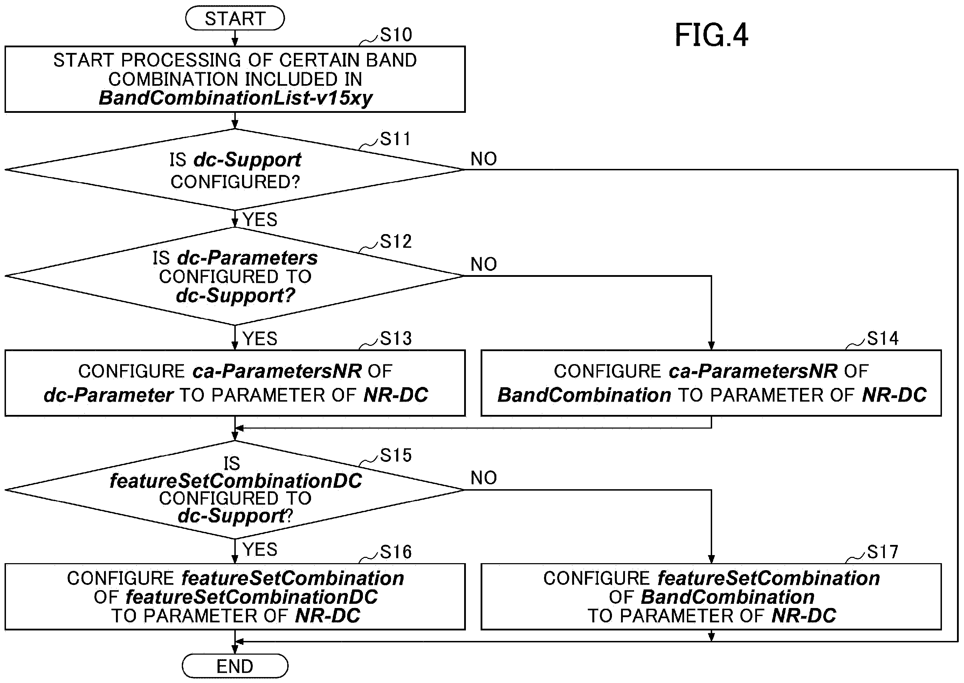

FIG. 4 is a flowchart for illustrating an exemplary operation according to an embodiment of the present invention. This flowchart may be applied to a case where the user equipment 20 configures the "BandCombinationList" included in the "UECapabilityInformation" or applied to interpretation of the information element in a case where the base station apparatus 10 receives "BandCombinationList" included in the "UECapabilityInformation".

At step S10, processing of one certain band combination included in the "BandCombinationList-v15xy" as one CA band combination is initiated. Then, at step S11, the base station apparatus 10 determines whether an information element "dc-Support" is configured in "BandCombinationList-v15xy". If the "dc-Support" is configured (S11: YES), the flow proceeds to step S12, and if the "dc-Support" is not configured (S11: NO), the band combination is determined not to support the NR-DC, and the flow is finished. Note that at step S11, when the user equipment 20 configures the "BandCombinationList" included in the "UECapabilityInformation", the user equipment 20 configures the "dc-Support" in the case where the band combination supports the DC and does not configure the "dc-Support" in the case where the band combination does not support the DC.

At step S12, the base station apparatus 10 determines whether an information element "dc-Parameters" is configured to the "dc-Support". If the "dc-Parameters" is configured (S12: YES), the flow proceeds to step S13, and if the "dc-Parameters" is not configured (S12: NO), the flow proceeds to step S14. Note that when the user equipment 20 configures the "dc-Parameters" included in the "dc-Support" at step S12, the user equipment 20 configures the "dc-Parameters" in the case where parameters for the NR-DC are configured for the band combination separately from the CA, and does not configure the "dc-Parameters" in the case where the parameters for the NR-DC are not configured for the band combination separately from the CA.

At step S13, the base station apparatus 10 configures an information element "ca-ParameterNR" of the "dc-Parameters" to parameters of the NR-DC for the band combination. On the other hand, at step S14, the base station apparatus 10 configures the information element "ca-ParameterNR" of the "BandCombination" to the parameters of the NR-DC for the band combination. Note that the "BandCombination" is an information element included in the "BandCombinationList" and is transmitted from the user equipment 20 to the base station apparatus 10 via the "UECapabilityInformation".

At step S15, the base station apparatus 10 determines whether an information element "featureSetCombinationDC" is configured to the "dc-Support". If the "featureSetCombinationDC" is configured (S15: YES), the flow proceeds to step S16, and if the "featureSetCombinationDC" is not configured (S15: NO), the flow proceeds to step S17. Note that at step S15, when the user equipment 20 configures the "featureSetCombinationDC" included in the "dc-Support", the user equipment 20 configures the "featureSetCombinationDC" in the case where parameters for the NR-DC are configured for the band combination separately from the CA, and does not configure the "featureSetCombinationDC" in the case where parameters for the NR-DC are not configured for the band combination separately from the CA.

At step S16, the base station apparatus 10 configures the information element "featureSetCombination" indicative of "featureSetCombinationDC" to the parameters for the NR-DC of the band combination, and the flow is finished. On the other hand, at step S17, the base station apparatus 10 configures the information element "featureSetCombination" indicative of "BandCombination" to the parameters for the NR-DC of the band combination, and the flow is finished.

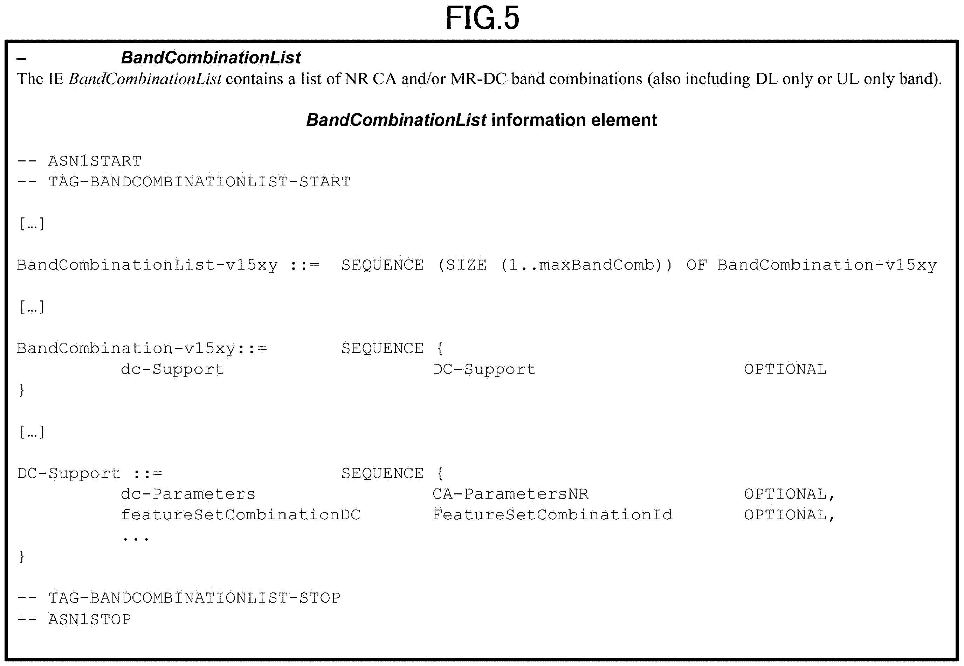

FIG. 5 is a diagram for illustrating an exemplary specification change (1) according to an embodiment of the present invention. As illustrated in FIG. 5, the information element "BandCombinationList-v15xy" includes a number of information elements "BandCombinationList-v15xy" corresponding to maxBandComb at maximum. The "BandCombinationList-v15xy"includes the information element "dc-Support". The "dc-Support" includes an information element "DC-Support". The "DC-Support" includes information elements "dc-Parameters" and "featureSetCombinationDC". The "dc-Parameters" includes an information element "CA-ParametersNR". The "featureSetCombinationDC" includes an information element "FeatureSetCombinationId". The "CA-ParametersNR" includes a UE capability associated with the CA defined per band combination. The "FeatureSetCombinationId" is an identifier for identifying FeatureSetCombination.

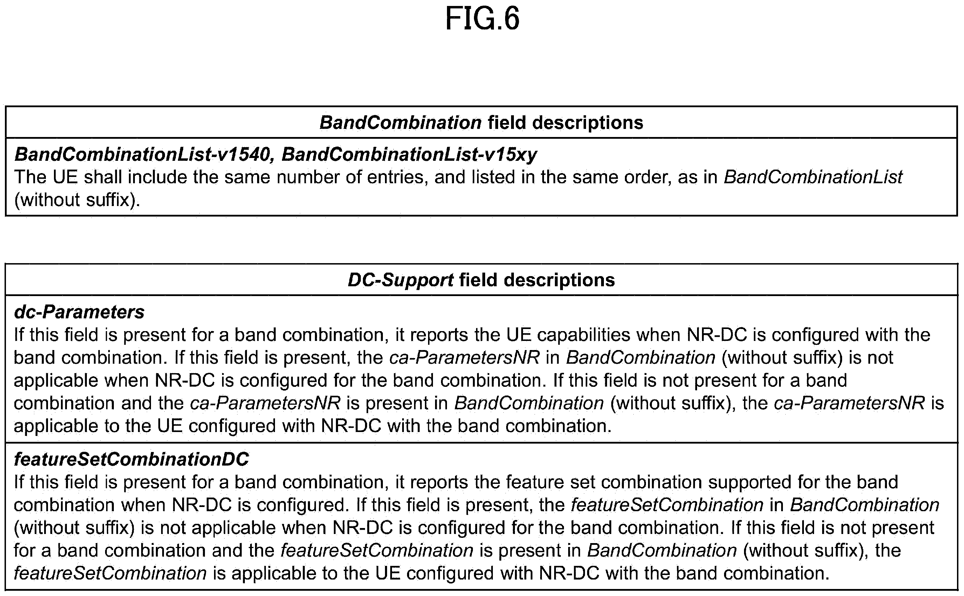

FIG. 6 is a diagram for illustrating an exemplary specification change (2) according to an embodiment of the present invention. As illustrated in FIG. 6, the "BandCombinationList-v15xy" includes the same number of entries as "BandCombinationList" in the same order.

Also, as illustrated in FIG. 6, if the "dc-Parameters" is included in the "DC-Support", the "dc-Parameters" indicates the UE capability associated with the target band combination when the NR-DC is configured for the target band combination. In other words, the "dc-Parameters" includes a configuration parameter associated with the CA defined per band combination. If the "dc-Parameters" is not included in the "DC-Support", the UE capability is configured for the band combination in accordance with the "BandCombination" when the NR-DC is configured for the target band combination.

Also, as illustrated in FIG. 6, if the "featureSetCombinationDC" is included in the "DC-Support", the "featureSetCombinationDC" indicates a featureSet at configuring the NR-DC for the target band combination. In other words, the "featureSetCombinationDC" includes a downlink and uplink configuration parameter defined per band combination. If the "featureSetCombinationDC" is not included in the "DC-Support", the featureSet is configured for the band combination in accordance with the "BandCombination" when the NR-DC is configured for the target band combination.

According to the above embodiments, if the NR-DC is configured for a certain band combination and the same UE capability as in the CA for the band combination is supported in the NR-DC for the band combination, the user equipment 20 can transmit a UE capability report of a reduced data amount to the base station apparatus 10 by not including the UE capability for the NR-DC in the report. Also, if the NR-DC is configured for a certain band combination and a UE capability different from the UE capability in the CA for the band combination is supported in the NR-DC for the band combination, the user equipment 20 can transmit the UE capability report corresponding to the NR-DC, in which the different UE capability is supported, to the base station apparatus 10.

Namely, the efficiency of reporting associated with the capability of the user equipment in the dual connectivity performed in a radio communication system can be improved.

### (Device Arrangement)

Next, exemplary functional arrangements of the base station apparatus 10 and the user equipment 20 that perform operations as stated above are described. The base station apparatus 10 and the user equipment 20 include functions of implementing the above-stated embodiments. Note that the base station apparatus 10 and the user equipment 20 each may have only a portion of the functions of the embodiments.

### <Base station apparatus 10>

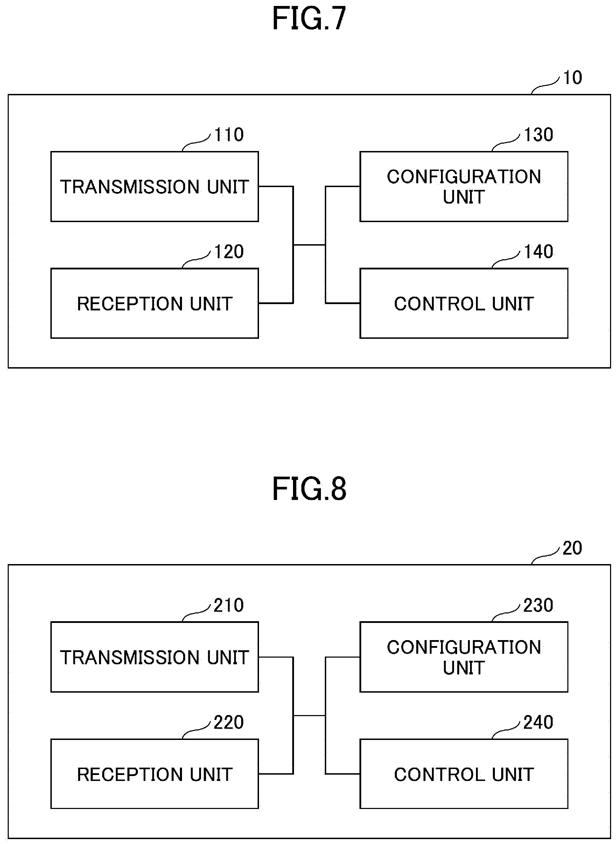

FIG. 7 illustrates an exemplary functional arrangement of the base station apparatus 10. As shown in FIG. 7, the base station apparatus 10 includes a transmission unit 110, a reception unit 120, a configuration unit 130 and a control unit 140. The functional arrangement shown in FIG. 7 is only one example. The functional separation and the names of the functional units may be arbitrary as long as operations according to the present embodiment can be achieved.

The transmission unit 110 includes a function of generating a signal for transmission to the side of the user equipment 20 and wirelessly transmitting the signal. Also, the transmission unit 110 transmits an inter-network-node message to other network nodes. The reception unit 120 includes a function of receiving various signals transmitted from the user equipment 20 and acquiring information for upper layers from the received signals, for example. Also, the transmission unit 110 includes a function of transmitting an NR-PSS, an NR-SSS, an NR-PBCH, a DL/UL control signal, a DL/UL data signal or the like to the user equipment 20. Also, the reception unit 120 receives the inter-network-node message from other network nodes.

The configuration unit 130 stores preconfigured configurations and various configurations for transmission to the user equipment 20. Contents of the configurations may be configurations regarding the dual connectivity, information associated with transmission and reception configurations depending on the UE capability of the user equipment 20 or the like, for example.

The control unit 140 controls transmissions and receptions including the dual connectivity to the user equipment 20 and operations of UE capability reports received from the user equipment 20 as stated in conjunction with the embodiments. The functional portions of the control unit 140 related to signal transmission may be included in the transmission unit 110, and the functional portions of the control unit 140 related to signal reception may be included in the reception unit 120.

### <User equipment 20>

FIG. 8 is a diagram for illustrating one exemplary functional arrangement of the user equipment 20. As illustrated in FIG. 8, the user equipment 20 has a transmission unit 210, a reception unit 220, a configuration unit 230 and a control unit 240. The functional arrangement shown in FIG. 8 is only one example. The functional separation and the names of the functional units may be arbitrary as long as operations according to the present embodiment can be achieved.

The transmission unit 210 generates a transmission signal from transmission data and wirelessly transmits the transmission signal. The reception unit 220 wirelessly receives various signals and acquires signals for upper layers from the received physical layer signals. Also, the reception unit 220 has a function of receiving an NR-PSS, an NR-SSS, an NR-PBCH, a DL/UL/SL control signal and so on transmitted from the base station apparatus 10. Also, for example, as D2D communication, the transmission unit 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) or the like to other user equipments 20, and the reception unit 120 receives the PSCCH, the PSSCH, the PSDCH, the PSBCH or the like from other user equipments 20.

The configuration unit 230 stores various configurations received at the reception unit 220 from the base station apparatus 10 or the user equipments 20. Also, the configuration unit 230 stores preconfigured configurations. Contents of the configurations may be configurations associated with the dual connectivity, information associated with transmission and reception configurations depending on the UE capability and so on, for example.

The control unit 240 controls transmissions and receptions including control associated with the UE capability reporting of the user equipment 20 and the dual connectivity depending on the UE capability as stated above. The functional portion of the control unit 240 regarding signal transmission may be included in the transmission unit 210, and the functional portion of the control unit 240 regarding signal reception may be included in the reception unit 220.

### (Hardware arrangement)

The block diagrams (FIGS. 7 and 8) used for the description of the above embodiments show blocks of functional units. These functional blocks (components) are implemented by any combination of at least one of hardware and software. In addition, the implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

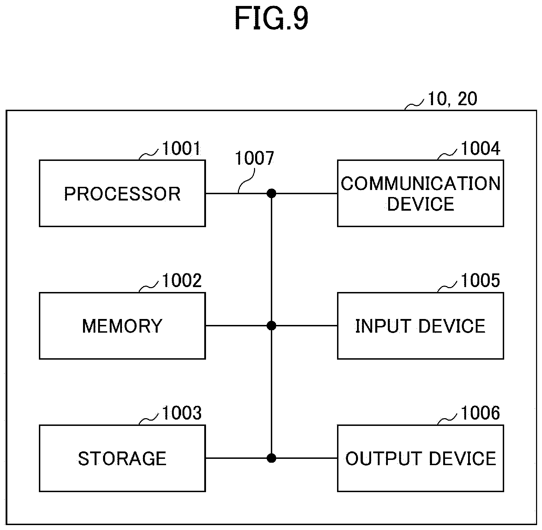

For example, each of the base station apparatus 10, the user equipment 20 and so on according to one embodiment of the present invention may function as a computer performing operations for a radio communication method according to this embodiment. FIG. 9 is a diagram illustrating an example of a hardware configuration of the base station apparatus 10 and the user equipment 20 according to one embodiment of the present disclosure. The base station 10 and the user equipment 20 as stated above may be physically configured as a computer device including a processor 1001, a memory 1002, a storage 1003, a communication device 1004, an input device 1005, an output device 1006, a bus 1007, etc .

In the following description, the term "device" can be read as a circuit, a device, a unit, etc. The hardware configuration of the base station apparatus 10 and the user equipment 20 may be configured to include one or more of the respective devices shown in the figure, or may be configured without some devices.

Each function of the base station apparatus 10 and the user equipment 20 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-stated control units 140 and 240 or the like may be implemented with the processor 1001.

Additionally, the processor 1001 reads a program (program code), a software module, data, etc., from at least one of the storage 1003 and the communication device 1004 to the memory 1002, and executes various processes according to these. As the program, a program is used which causes a computer to execute at least a part of the operations described in the above-described embodiment. For example, the control unit 140 of the base station apparatus 10 shown in FIG. 10 may be implemented by a control program that is stored in the memory 1002 and that is operated by the processor 1001. Also, for example, the control unit 240 of the user equipment 20 shown in FIG. 11 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips . The program may be transmitted from a network via a telecommunications line.

The memory 1002 is a computer readable storage medium, and, for example, the memory 1002 may be formed of at least one of a ROM (Read Only Memory), an EPROM (Erasable Programmable ROM), an EEPROM (Electrically Erasable Programmable ROM), a RAM (Random Access Memory), etc. The memory 1002 may be referred to as a register, a cache, a main memory (main storage device), etc. The memory 1002 may store a program (program code), a software module, etc., which can be executed for implementing the radio communication method according to one embodiment of the present disclosure.

The storage 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplex (FDD: Frequency Division Duplex) and time division duplex (TDD: Time Division Duplex). For example, a transceiver antenna, an amplification unit, a transceiver unit, a channel interface or the like may be implemented with the communication device 1004. The transceiver unit may have an implementation with the transmission unit and the reception unit that are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel) .

Each device, such as processor 1001 and memory 1002, is also connected by the bus 1007 for communicating information. The bus 1007 may be formed of a single bus or may be formed of different buses between devices.

Also, the base station apparatus 10 and the user equipment 20 may include hardware, such as a microprocessor, a digital signal processor (DSP: Digital Signal Processor), an ASIC (Application Specific Integrated Circuit), a PLD (Programmable Logic Device), and a FPGA (Field Programmable Gate Array), which may implement some or all of each functional block. For example, the processor 1001 may be implemented using at least one of these hardware components.

### (Conclusion of the embodiments)

As stated above, according to an embodiment of the present invention, there is provided a user equipment, comprising: a reception unit that receives information requesting a report of a UE (User Equipment) capability from a base station apparatus; a control unit that includes the UE capability supported for a band combination in the report; and a transmission unit that transmits the report to the base station apparatus, wherein the control unit includes information in the report indicating that a parameter supported in carrier aggregation for the band combination is applied to dual connectivity.

According to the above arrangement, if NR-DC is configured for a certain band combination and the same UE capability as in CA for the band combination is supported in the NR-DC for the band combination, the user equipment 20 can transmit a UE capability report of a reduced data amount to the base station apparatus 10 by including no UE capability for the NR-DC in the report. In other words, the efficiency of reporting associated with the capability of the user equipment in the dual connectivity in the radio communication system can be improved.

If the parameter supported in the band combination, where the user equipment performs carrier aggregation with the base station apparatus, is applied to dual connectivity in the band combination, the control unit may configure a first information element to the report in the case where the user equipment performs dual connectivity with the base station apparatus in the band combination, and may not configure a second information element to the first information element. According to the arrangement, if the NR-DC is configured for a certain band combination and the same UE capability as in the CA for the band combination is supported in the NR-DC for the band combination, the user equipment 20 can transmit a UE capability report of a reduced data amount by including no UE capability for the NR-DC in the report.

The second information element may be a configuration parameter associated with carrier aggregation defined per band combination or a downlink and uplink configuration parameter defined per band combination. According to the arrangement, if the NR-DC is configured for a certain band combination and a UE capability different from the UE capability in the CA for the band combination is supported in the NR-DC for the band combination, the user equipment 20 can transmit a UE capability report corresponding to the NR-DC supporting the UE capability different from the UE capability in the CA by including a UE capability in the NR-DC in the report.

Also, according to an embodiment of the present invention, there is provided a base station apparatus, comprising: a transmission unit configured to transmit information requesting a report of a UE (User Equipment) capability to a user equipment; a reception unit configured to receive the report from the user equipment; and a control unit configured to configure dual-connectivity-applied communication based on the UE capability supported for a band combination included in the report, wherein if the report includes information indicating that a parameter supported in carrier aggregation for the band combination is applied to dual connectivity, the control unit applies the parameter supported in the carrier aggregation for the band combination to dual connectivity.

According to the above arrangement, if NR-DC is configured for a certain band combination and the same UE capability as in CA for the band combination is supported in the NR-DC for the band combination, the user equipment 20 can transmit a UE capability report of a reduced data amount to the base station apparatus 10 by including no UE capability for the NR-DC in the report. In other words, the efficiency of reporting associated with the capability of the user equipment in the dual connectivity in the radio communication system can be improved.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto) . In the above, the description has been made for the case where another network node other than the base station apparatus 10 is a single node as an example. However, the other network node may be a combination of a plurality of other network nodes (for example, an MME and a S-GW) .

Information, signals, or the like described in the present disclosure may be output from an upper layer (or a lower layer) to a lower layer (or an upper layer). Information, signals, or the like described in the present disclosure may be input and output via a plurality of network nodes.

Information or the like that has been input or output may be stored at a predetermined location (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be replaced with a word corresponding to communication between terminals (for example, "side"). For example, an uplink channel, a downlink channel, or the like may be replaced with a side channel.

Similarly, a user terminal according to the present disclosure may be read as a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to assign, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource assignment unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements) . For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the UECapabilityEnquiry is one example of the information requesting a report of a UE capability. The UECapabilityInformation is one example of the report of the UE capability. The transmission unit 210 and the reception unit 220 is one example of the communication unit. The ca-ParametersNR or the featureSetCombination of BandCombination is one example of the parameter supported for a band combination where carrier aggregation is performed. The dc-Support is one example of the first information element. The dc-Parameters or the featureSetCombinationDC is one example of the second information element. The dc-Parameters is one example of the configuration parameter associated with carrier aggregation defined per band combination. The featureSetCombinationDC is one example of the downlink and uplink configuration parameter defined per band combination.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### LIST OF REFERENCE SYMBOLS

- 10: Base station apparatus
- 110: Transmission unit
- 120: Reception unit
- 130: Configuration unit
- 140: Control unit
- 20: User equipment
- 210: Transmission unit
- 220: Reception unit
- 230: Configuration unit
- 240: Control unit
- 1001: Processor
- 1002: Memory
- 1003: Storage
- 1004: Communication device
- 1005: Input device
- 1006: Output device

## Claims

1. A user equipment, comprising:
a reception unit configured to receive information requesting a report of a UE (User Equipment) capability from a base station apparatus;
a control unit configured to include the UE capability supported for a band combination in the report; and
a transmission unit configured to transmit the report to the base station apparatus,
wherein the control unit includes information indicating that a parameter supported in carrier aggregation for the band combination is applied to dual connectivity in the report.

2. The user equipment as claimed in claim 1, wherein in a case where the parameter supported in carrier aggregation for the band combination is applied to dual connectivity, the control unit configures a first information element to the report and does not configure a second information element to the first information element.

3. The user equipment as claimed in claim 2, wherein the second information element is a configuration parameter associated with carrier aggregation defined per band combination or a downlink and uplink configuration parameter defined per band combination.

4. A base station apparatus, comprising:
a transmission unit configured to transmit information requesting a report of a UE (User Equipment) capability to a user equipment;
a reception unit configured to receive the report from the user equipment; and
a control unit configured to configure dual-connectivity-applied communication based on the UE capability supported for a band combination included in the report,
wherein in a case where the report includes information indicating that a parameter supported in carrier aggregation for the band combination is applied to dual connectivity, the control unit applies the parameter supported in the carrier aggregation for the band combination to dual connectivity.
